# EUROPÄISCHE PATENTSCHRIFT

(11) **EP 0 780 616 B1**
(45) Veröffentlichungstag und Bekanntmachung des Hinweises auf die Patenterteilung: **06.05.1999**
(21) Anmeldenummer: 96119811.6
(22) Anmeldetag: 10.12.1996
(51) Int. Cl.: F16L 3/123, F16L 3/13, H02G 3/26

(54) **Befestigungselement aus Kunststoff**
Plastic fastening device
Dispositif de fixation en matière plastique

(30) Priorität: 21.12.1995 DE 19548079
(43) Veröffentlichungstag der Anmeldung: 25.06.1997
(73) Patentinhaber: TRW Automotive Electronics & Components GmbH & Co. KG, 78315 Radolfzell (DE)
(72) Erfinder: Kraus, Willibald, 67269 Grünstadt (DE)
(74) Vertreter: Schieschke, Klaus, Dipl.-Ing.

(56) Entgegenhaltungen:
- DE-A- 4 324 489
- GB-A- 1 411 193
- US-A- 2 836 215
- US-A- 4 653 716

## Beschreibung

Die Erfindung bezieht sich auf ein Befestigungselement aus Kunststoff, insbesondere für Leitungsstränge oder Rohre, mit einem an einem Träger, insbesondere Kraftfahrzeug-Karosserie befestigbaren Haltebereich und einem die Leitungsstränge oder Rohre zumindest teilweise umgreifenden, elastischen Befestigungsbereich, welcher aus der den Leitungssträngen oder Rohren zugekehrten Seite mit Klebematerial beschichtet ist.

Als Stand der Technik ist bereits bekannt, derartige Befestigungselemente auf der Unterseite einer Bodenplatte mit Klebemitteln zu beschichten, wodurch über die Klebemittel eine Befestigung an einem Träger möglich ist. Hierbei sind die Haltebereiche entweder mit Dämpfungselementen versehen (US-PS 4,457,053), oder insbesondere aus Blech bestehende Zungen, welche nach Einführen des Rohres umgebogen werden (FR-PS 1 508 236, FR-PS 1 188 066).

Als Stand der Technik, von dem die vorliegende Erfindung ausgeht, ist ein Befestigungselement bekannt (DE 43 24 489 A1), bei welchem das Halteelement in Form einer flexiblen Lasche ausgebildet ist, welches nach Art eines Bandes um ein zu halterndes Rohr oder Leitungsstrang geschlungen werden kann. Es hängt hierbei von der Sorgfalt der diesen Montagevorgang durchführenden Bedienperson ab, inwieweit die Halterung der Leitungsstränge oder Rohre nach diesem Umschlingen funktionssicher ist.

Entsprechend liegt der vorliegenden Erfindung die Aufgabe zugrunde, ein Befestigungselement der eingangs genannten Art so zu gestalten, daß auf einfache Weise eine sichere Halterung von Haltungssträngen oder Rohren gewährleistet ist.

Diese Aufgabe wird erfindungsgemäß dadurch gelöst, daß der Befestigungsbereich aus mindestens einem, den Außenumfang der Leitungsstränge oder Rohre zumindest teilweise beaufschlagenden, schalenförmig ausgebildeten Federelement besteht, dessen Innenumfang mit dem unter Einwirkung von Wärme mit den Leitungssträngen oder Rohren verschmelzbaren Klebematerial versehen ist. Hierdurch ergibt sich der Vorteil, daß es keiner besonderen Sorgfalt bedarf, um von vornherein eine funktionssichere Befestigung von Rohren oder Leitungssträngen an einem Befestigungspunkt eines Trägers, insbesondere einer Kraftfahrzeugkarosserie zu gewährleisten: Nach Einlegen dieser Rohre oder Leitungsstränge schnappt das Federelement in seine ursprüngliche Lage zurück, wonach durch Einwirkung von Wärme auf das Klebemittel ein Verschmelzen mit diesem und den Leitungssträngen erfolgt und damit eine einwandfreie Befestigung geschaffen ist.

In weiterer Ausgestaltung der Erfindung kann das Federelement in mehrere Abschnitte aufgeteilt sein und jeweils einen mit einer Bodenplatte verbundenen Wurzelbereich und einen Eintrittsbereich aufweisen. Hierbei können die Eintrittsbereiche benachbarter Abschnitte des Federelements in Längsrichtung der Leitungsstränge oder Rohre abwechselnd auf deren linken oder rechten Seite liegen.

Alternativ besteht auch die Möglichkeit, daß das Federelement aus einem einzigen Abschnitt mit Wurzelbereich und Eintrittsbereich besteht.

Um einen guten Toleranzausgleich bei eventuellem Versatz der Haltepunkte an dem Träger zu gewährleisten, kann der Haltebereich des Befestigungselements in Längsrichtung der Leitungsstränge oder Rohre verstellbar sein. Hierbei kann die Bodenplatte unterseitig mit mindestens einem, mit dem Haltebereich zusammenwirkenden Verstellelement versehen sein. Findet als Haltebereich ein Profilzapfen oder ein Halteclip Anwendung, so kann das Verstellelement beispielsweise als eine in Längsrichtung der Leitungsstränge verlaufende Schwalbenschwanzführung gestaltet sein, in welcher ein mit einem Gegenprofil versehener Kopf des Profilzapfens oder Halteclips verschiebbar gelagert ist. Damit besteht die Möglichkeit, einen weitreichenden Toleranzausgleich zwischen der Anordnung einer Öffnung in dem Träger, d.h. beispielsweise einer Kraftfahrzeugkarosserie und dem die Leitungsstränge oder Rohre umfassenden Haltebereich herzustellen.

Die Erfindung wird nachfolgend anhand von in der Zeichnung dargestellten Ausführungsbeispielen näher beschrieben. In der Zeichnung zeigen:
- Fig. 1: eine perspektivische Ansicht eines erfindungsgemäßen Befestigungselements mit drei Abschnitten des Federelements im Anlieferungszustand,
- Fig. 2: die Ausführungsform nach Fig. 1 in geöffnetem Zustand,
- Fig. 3: eine andere Ausführungsmöglichkeit des Befestigungselements in perspektivischer Ansicht, teils gebrochen,
- Fig. 4: eine weitere Ausführungsmöglichkeit des erfindungsgemäßen Befestigungselements in perspektivischer Ansicht.

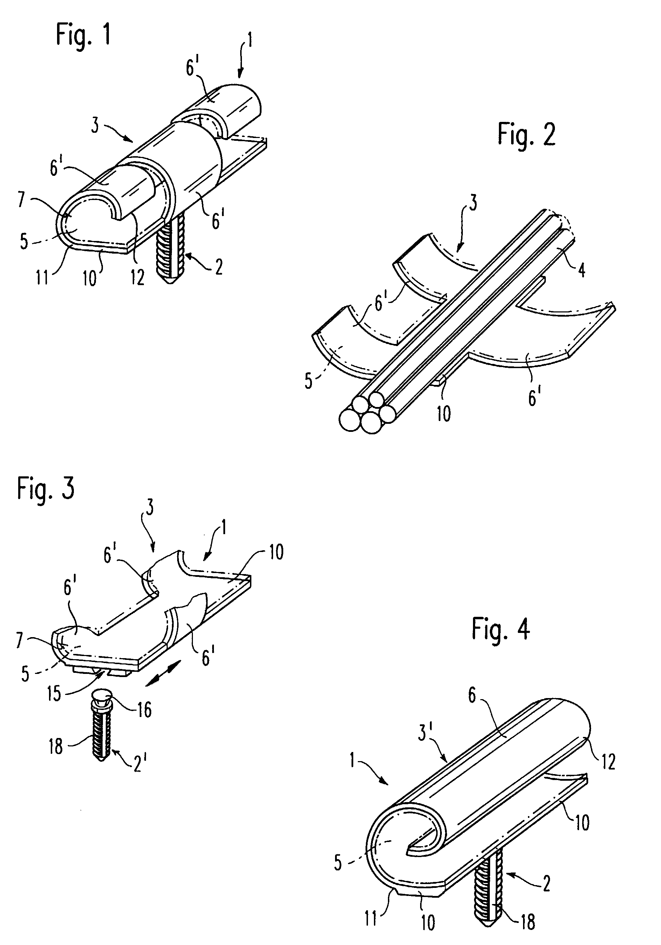

In Fig. 1 und 2 ist ein Befestigungselement 1 aus Kunststoff dargestellt, welches insbesondere zur Halterung von Leitungssträngen oder Rohren dient. Dieses Befestigungselement 1 ist mit einem an einem nicht näher dargestellten Träger, insbesondere an Kraftfahrzeugkarosserie befestigbaren Haltebereich 2 und einem die Leitungsstränge zumindest teilweise umgreifenden elastischen Befestigungsbereich 3 versehen. Der Befestigungsbereich ist auf seinem Innenumfang 7 mit Klebematerial 5 beschichtet.

Bei den in den Zeichnungen dargestellten Ausführungsbeispielen ist der Haltebereich 2 als Profilbolzen gestaltet; er kann jedoch beispielsweise auch als Halteclip oder in jeder anderen bekannten Form beschaffen sein.

Der Befestigungsbereich 3 besteht aus mindestens einem, den Außenumfang der Leitungsstränge 4 zumindest teilweise beaufschlagenden, schalenförmig ausgebildeten Federelement 6' dessen Innenumfang 7 mit Klebematerial 5 versehen ist, welches unter Einwirkung von Wärme mit den Leitungssträngen 4 verschmilzt.

Das Federelement 6' besteht aus mehreren Abschnitten, wobei jeder Abschnitt einen mit einer Bodenplatte 10 verbundenen Wurzelbereich 11 und einen Eintrittsbereich 12 aufweist. Hierbei liegen die Eintrittsbereich 12 benachbarter Abschnitte des Federelements 6' in Längsrichtung der Leitungsstränge 4 abwechselnd auf deren linken und rechten Seite, wobei gemäß der Ausführungsform nach Fig. 1, 2 und 3 drei Abschnitte des Federelements 6' vorgesehen sind.

Fig. 1 zeigt das erfindungsgemäße Befestigungselement im Anlieferungszustand. Sollen nun Leitungsstränge 4 über das erfindungsgemäße Befestigungselement 1 in einer Öffnung eines nicht näher dargestellten Trägers gehaltert werden, so wird nach Fig. 2 der Befestigungsbereich 3, d.h. die drei Abschnitte des Federelements 6' geöffnet; nach Einlegen der Leitungsstränge schließen sich infolge der federnden Ausbildung die Abschnitte des Federelements 6' und kehren in ihre ursprüngliche Konfiguration nach Fig. 1 zurück. Nunmehr kann die so vormontierte Einheit in eine Öffnung des Trägers eingesetzt werden, wonach durch Einwirkung von Wärme auf das Klebematerial 5 dieses mit dem Außenumfang der Leitungsstränge verschmilzt und damit eine funktionssichere Halterung herstellt.

Bei der Ausführungsform nach Fig. 1 und 2 ist es erforderlich, daß die Öffnung des Trägers punktgenau auf die Anordnung des Haltebereichs 2 abgestellt ist.

Fig. 3 zeigt eine andere Ausführungsform des Befestigungselements 1, welche einen Toleranzausgleich ermöglicht: Wie ersichtlich, ist die Bodenplatte 10 an ihrer Unterseite mit einem Verstellelement in Form eines in Längsrichtung der Leitungsstränge 4 verlaufenden Schwalbenschwanzführung 15 versehen. Der Haltebereich 2', welcher beispielsweise als Profilzapfen 18 ausgebildet ist, weist einen Kopf 16 auf, der mit einem an die Schwalbenschwanzführung 15 angepaßten Gegenprofil ausgestattet ist. Damit ist es möglich, in Pfeilrichtung das erfindungsgemäße Befestigungselement 1 zu verschieben, woraus sich ein guter Toleranzausgleich ergibt.

Während bei den Ausführungsformen nach Fig. 1 bis 3 das Federelement 6' aus mehreren Abschnitten besteht, zeigt Fig. 4 eine Ausführungsform, bei welcher das Federelement 6 in Form eines einzigen Abschnitts mit Wurzelbereich 11 und Eintrittsbereich 12 gestaltet ist. Wiederum ist der Innenumfang des Federelements 6 mit einem Klebematerial 5 versehen, welches unter Einwirkung von Wärme mit dem betreffenden Leitungsträger 4 verschmelzbar ist.

Erfindungsgemäß ergibt sich damit ein Befestigungselement 1, welches auf einfache Weise zu einer sicheren Befestigung von Leitungssträngen 4 oder Rohren an einem Träger führt, ohne daß hierzu eine besondere Sorgfalt und Ausbildung der Bedienperson bei der Montage erforderlich ist. Der oder die Abschnitte des Federelements 6 bzw. 6' umfassen verschiebesicher die zu halternden Leitungsstränge oder Rohre, wobei durch die Einwirkung von Wärme über das Klebematerial 5 ein Verschmelzen erfolgt und die gesamte montierte Einheit damit funktionssicher gehaltert ist.

## Patentansprüche

1. Befestigungselement aus Kunststoff, insbesondere für Leitungsstränge oder Rohre, mit einem an einem Träger, insbesondere Kraftfahrzeug-Karosserie befestigbaren Haltebereich (2, 2') und einem die Leitungsstränge (4) oder Rohre zumindest teilweise umgreifenden, elastischen Befestigungsbereich (3, 3'), welcher auf der den Leitungssträngen (4) oder Rohren zugekehrten Seite mit Klebematerial (5) beschichtet ist,
dadurch gekennzeichnet,
daß der Befestigungsbereich (3, 3') aus mindestens einem, den Außenumfang der Leitungsstränge (4) oder Rohre zumindest teilweise beaufschlagenden, schalenförmig ausgebildeten Federelement (6, 6') besteht, dessen Innenumfang (7) mit dem unter Einwirkung von Wärme mit den Leitungssträngen (4) oder Rohren verschmelzbaren Klebematerial (5) versehen ist.

2. Befestigungselement nach Anspruch 1,
dadurch gekennzeichnet,
daß das Federelement (6') in mehrere Abschnitte aufgeteilt ist und jeweils einen mit einer Bodenplatte (10) verbundenen Wurzelbereich (11) und einem Eintrittsbereich (12) aufweist.

3. Befestigungselement nach Anspruch 2,
dadurch gekennzeichnet,
daß die Eintrittsbereiche (12) benachbarter Abschnitte des Federelements (6') in Längsrichtung der Leitungsstränge (4) oder Rohre abwechselnd auf deren linken und rechten Seite liegen.

4. Befestigungselement nach Anspruch 3,
dadurch gekennzeichnet,
daß drei Abschnitte des Federelements (6') vorgesehen sind.

5. Befestigungselement nach Anspruch 1,
dadurch gekennzeichnet,
daß das Federelement (6) aus einen einzigen Abschnitt mit Wurzelbereichen (11) und Eintrittsbereichen (12) besteht.

6. Befestigungselement nach einem der vorhergehenden Ansprüche,
dadurch gekennzeichnet,
daß der Haltebereich (2') in Längsrichtung der Leitungsstränge (4) oder Rohre verstellbar ist.

7. Befestigungselement nach Anspruch 2 bis 6,
dadurch gekennzeichnet,
daß die Bodenplatte (10) unterseitig mit mindestens einem, mit dem Haltebereich (2') zusammenwirkenden Verstellelement versehen ist.

8. Befestigungselement nach Anspruch 7,
dadurch gekennzeichnet,
daß das Verstellelement eine in Längsrichtung der Leitungsstränge (4) oder Rohre verlaufende Schwalbenschwanzführung (15) ist, in welcher ein mit einem Gegenprofil versehener Kopf (16) des als Profilzapfen (18) oder Halteclip ausgebildeten Haltebereichs (2') verschiebbar gelagert ist.

## Claims

1. Plastic fastening device, in particular for lengths of line or for pipes, with the holding region (2, 2') capable of being fastened to a carrier, in particular a motor vehicle body, and with an elastic fastening region (3, 3') which at least partially surrounds the lengths of line (4) or the pipes and which is coated with adhesive material (5) on the side facing the lengths of line (4) or the pipes, characterized in that the fastening region (3, 3') consists of at least one shell-like spring element (6, 6') which at least partially acts on the outer circumference of the lengths of line (4) or of the pipes and the inner circumference (7) of which is provided with adhesive material (5) capable of fusing under the effect of heat with the lengths of line (4) or the pipes.

2. Fastening device according to Claim 1, characterized in that the spring element (6') is divided into a plurality of portions and in each case has a root region (11), connected to a baseplate (10), and an entry region (12).

3. Fastening device according to Claim 2, characterized in that the entry regions (12) of adjacent portions of the spring element (6') are located alternately on the left side and the right side of the lengths of line (4) or of the pipes in the longitudinal direction of these.

4. Fastening device according to Claim 3, characterized in that three portions of the spring element (6') are provided.

5. Fastening device according to Claim 1, characterized in that the spring element (6) consists of a single portion with root regions (11) and with entry regions (12).

6. Fastening device according to one of the preceding claims, characterized in that the holding region (2') is adjustable in the longitudinal direction of the lengths of line (4) or of the pipes.

7. Fastening device according to Claims 2 to 6, characterized in that the baseplate (10) is provided on the underside with at least one adjusting element cooperating with the holding region (2').

8. Fastening device according to Claim 7, characterized in that the adjusting element is a dovetail guide (15) which runs in the longitudinal direction of the lengths of line (4) or of the pipes and in which is displaceably mounted a head (16) of the holding region (2') designed as a profiled pin (18) or a holding clip, the said head being provided with a counter-profile.

## Revendications

1. Elément de fixation en matière plastique, notamment pour des faisceaux de conduites ou des tubes, comportant une partie de retenue (2, 2') qui peut être fixée sur un support, notamment sur une carrosserie de véhicule automobile, et une partie de fixation élastique (3, 3'), qui enserre au moins partiellement les faisceaux de conduites (4) ou les tubes et qui est recouverte d'un matériau adhésif (5) sur la surface tournée vers les faisceaux de conduites (4) ou les tubes, caractérisé en ce que la partie de fixation (3, 3') est constituée par au moins un élément de ressort (6, 6'), qui charge au moins partiellement la périphérie extérieure des faisceaux de conduites (4) ou des tubes et est agencée en forme de coque et dont la périphérie intérieure (7) est garnie du matériau adhésif (5) qui peuvent être réunis par fusion, sous l'action d'une chaleur, aux faisceaux de conduites (4) ou aux tubes.

2. Elément de fixation selon la revendication 1, caractérisé en ce
que l'élément de ressort (6') est subdivisé en plusieurs tronçons et comporte respectivement une partie de base (11) reliée à une plaque de fond (10), et une partie d'entrée (12).

3. Elément de fixation selon la revendication 2, caractérisé en ce
que les parties d'entrée (12) de tronçons voisins de l'élément de ressort (6') sont disposées alternativement sur le côté gauche et sur le côté droit, dans la direction longitudinale des faisceaux de conduites (4).

4. Elément de fixation selon la revendication 3, caractérisé en ce
qu'il est prévu trois tronçons de l'élément de ressort (6').

5. Elément de fixation selon la revendication 1, caractérisé en ce
que l'élément de ressort (6) est constitué par un seul tronçon comportant des parties de base (11) et des parties d'entrée (12).

6. Elément de fixation selon l'une des revendications précédentes, caractérisé en ce
que la partie de retenue (2') est réglable dans la direction longitudinale des faisceaux de conduites (4) ou des tubes.

7. Elément de fixation selon les revendications 2 à 6, caractérisé en ce
que la plaque de fond (10) est équipée, au niveau de sa face inférieure, d'au moins un élément de réglage, qui coopère avec la partie de retenue (2').

8. Elément de fixation selon la revendication 7, caractérisé en ce
que l'élément de réglage est un système de guidage en queue d'aronde (15), qui s'étend dans la direction longitudinale des faisceaux de conduites (4) ou des tubes et dans lequel est montée de manière à être déplaçable une tête (16), pourvue d'un profil antagoniste, de la partie de retenue (2') agencée sous la forme d'une tige profilée (18) ou d'une pince de retenue.
